## Europäisches Patentamt

## European Patent Office

## Office européen des brevets

(11) Veröffentlichungsnummer: **0 149 090**
**B1**

(12) **EUROPÄISCHE PATENTSCHRIFT**

(45) Veröffentlichungstag der Patentschrift:
08.06.88

(51) Int. Cl.⁴: **F 16 L 59/06,** F 16 L 59/02,
H 01 M 10/39, H 01 M 6/20

(21) Anmeldenummer: **84114638.4**

(22) Anmeldetag: **01.12.84**

(54) **Thermische Isolierung.**

(30) Priorität: **14.12.83 DE 3345141**

(43) Veröffentlichungstag der Anmeldung:
**24.07.85 Patentblatt 85/30**

(45) Bekanntmachung des Hinweises auf die Patenterteilung:
**08.06.88 Patentblatt 88/23**

(84) Benannte Vertragsstaaten:
**BE FR GB IT NL**

(56) Entgegenhaltungen:
**DE-A-3 038 142**
**DE-A-3 046 032**
**DE-A-3 235 708**
**DE-A-3 304 738**

(73) Patentinhaber: **BROWN, BOVERI & CIE
Aktiengesellschaft, Kallstadter Strasse 1, D-6800
Mannheim 31 (DE)**

(72) Erfinder: **Ziegenbein, Botho, Dr.,
Eichendorffstasse 4, D-6901 Neckarsteinach (DE)**

(74) Vertreter: **Kempe, Wolfgang, Dr., c/o BROWN,
BOVERI & CIE AG ZPT Postfach 351, D-6800
Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine thermische Isolierung gemäß dem Oberbegriff des Patentanspruches 1.

Solche thermischen Isolierungen kommen unter anderem in der Energietechnik zur Anwendung, insbesondere bei Einrichtungen, bei denen Wärmeverluste vermieden werden sollen. Thermische Isolierungen werden beispielsweise bei Hochtemperaturspeicherbatterien auf der Basis von Alkalimetall und Chalkogen verwendet. Die Speicherzellen, die zu einer Batterie zusammengeschaltet sind, werden zusätzlich von einer thermischen Isolierung umgeben, um die erforderliche Arbeitstemperatur der Speicherzellen, welche bei etwa 400 Grad Celsius liegt, aufrecht erhalten zu können, und die Abkühlung der Speicherzellen vor allem in den Betriebspausen der Hochtemperaturspeicherbatterie zu verhindern, damit auch nach den Pausen eine Temperatur von 350 bis 400 Grad Celsius in den Speicherzellen herrscht, was eine notwendige Voraussetzung für die optimale Funktionsweise der Speicherzellen ist.

In der DE-A-32 35 708 ist bereits eine thermische Isolierung beschrieben, die durch ein doppelwandiges Gehäuse begrenzt ist. Zwischen den beiden Gehäusewandungen ist ein evakuierter Raum vorgesehen, in den ein den Wärmefluß zwischen den Gehäusewandungen hemmende senkrecht zum Temperaturgradienden angeordnete Isoliermasse eingefüllt ist. Bei der hier beschriebenen Anordnung besteht das Isoliermaterial aus Fasern, vorzugsweise aus Glasfasern. Der Wärmetransport in einer solchen thermischen Isolierung, deren Isoliermaterial aus Fasern besteht setzt sich bei hinreichend niedrigem Restgasdruck innerhalb des evakuierten Raums aus einem Festkörperleitungs- und einem Strahlungsanteil zusammen. Den die Festkörperleitung bestimmenden Wärmewiderstand bilden die Kontaktflächen der senkrecht zum Temperaturgradienden ausgerichteten Glasfasern. Wird das Isoliermaterial hohen Temperaturen ausgesetzt, d. h. es herrscht im Inneren der thermischen Isolierung eine Temperatur von mehr als 350 Grad Celsius, so kann anhand von Messungen festgestellt werden, daß bei einer zusätzlichen Druckbelastung des Isoliermaterials die Festkörperleitfähigkeit mit steigender Temperatur zunimmt. Dies ist insbesondere bei einem Isoliermaterial festzustellen, das aus Glasfasern gefertigt ist, die aus einem Borsilikatglas hergestellt sind. Diese Erhöhung der Festkörperleitfähigkeit ist auf eine Vergrößerung der Faserkontaktflächen zurückzuführen, da der Elastizitätsmodul von Fasern aus handelsüblichen Gläsern exponentiell mit steigender Temperatur abfällt. Durch die Verwendung von Fasern, die aus Quarzglas oder aus Keramik hergestellt sind, kann dieser Nachteil vermieden werden, jedoch sind thermische Isolierungen, deren Isoliermaterial aus diesen Werkstoffen gefertigt ist, sehr teuer.

Aus der DE-OS-3 304 738 sind nahtlose Verbunderzeugnisse aus Keramikfasern bekannt. Es handelt sich hierbei um Matten, die als Isoliermaterial für Hochtemperaturöfen benutzt werden. Jede der verwendeten Matten weist zwei unterschiedliche Bereiche auf, die aus unterschiedlichen Werkstoffen hergestellt sind. Für den Teil der Matte, der sehr hohen Temperaturen ausgesetzt ist, werden zur Herstellung polykristalline Aluminiumoxidfasern verwendet. Der übrige Teil der Matte, der weniger hohen Temperaturen ausgesetzt ist, wird vorzugsweise aus glasartigen Aluminiumoxid-Siliziumdioxidfasern gefertigt. Mehrere solche Matten werden auf einer Platte befestigt, die an dem zu isolierenden Bauteil befestigt wird.

Der Erfindung liegt die Aufgabe zugrunde, eine thermische Isolierung mit einem Isoliermaterial aus Glasfasern so zu verbessern, daß auch bei Temperaturen zwischen 400 und 600 Grad im Inneren der thermischen Isolierung die Wärmeisolationseigenschaft des Isoliermaterials ebenso gut ist wie bei wesentlich niedrigeren Temperaturen.

Diese Aufgabe wird erfindungsgemäß durch die kennzeichnenden Merkmale des Patentanspruches 1 gelöst.

Das in den evakuierten Raum der thermischen Isolierung eingefüllte Isoliermaterial wird nicht über die gesamte Dicke aus dem gleichen Werkstoff gefertigt. Vielmehr besteht das Isoliermaterial aus Glasfasern, die aus wenigstens drei unterschiedlichen Glaswerkstoffen hergestellt sind. Erfindungsgemäß werden innerhalb des evakuierten Raumes drei Schichten aus Glasfasern so hintereinander angeordnet, daß sie senkrecht zum Temperaturgradienden angeordnet sind. Die Dicke der Schichten ist unterschiedlich groß gewählt, insbesondere wird sie durch den Temperaturabfall innerhalb des Isoliermaterials bestimmt. Die drei Schichten sind direkt aneinanderliegend angeordnet. Die äußerste Schicht grenzt an die Innenfläche der äußeren Gehäusewandung und die innerste Schicht grenzt an die Innenfläche der inneren Gehäusewandung an. Die äußere Schicht ist erfindungsgemäß 10 mm dick und aus Glasfasern gefertigt, die aus einem Alkali-Bleisilikatglas hergestellt sind. Die zwischen der inneren und äußeren Schicht liegende zweite Schicht ist 15 mm dick und aus Glasfasern gefertigt, welche aus einem Weich-Borsilikatglas hergestellt sind. Die dem Innenraum der Isolierung am nächsten liegende Schicht ist erfindungsgemäß 5 mm dick und aus Glasfasern gefertigt, die aus einem Hart-Borsilikatglas gefertigt sind. Das verwendete Isoliermaterial, insbesondere die Glasfasern weisen die Eigenschaft auf, daß ihr Elastizitätsmodul auch bei hohen Temperaturen, insbesondere bei Temperaturen von mehr als 400 Grad Celsius einen vorgegebenen Wert nicht unterschreitet. Vorzugsweise weisen Glasfasern aus Alkali-Bleisilikatglas bei einer Temperatur von 400 Grad Celsius einen Elastizitätsmodul von z B. 4414 Da N/mm$^2$ (4500 kg/mm$^2$) auf. Der Elastizitätsmodul von Glasfasern aus Weichborsilikatglas unterschreitet einen Wert von z. B. 5395 Da N/mm$^2$ (5500 kg/mm$^2$) bei einer Temperatur von 400 Grad Celsius ebenfalls nicht. Das gleiche gilt für Glasfasern aus Hartborsilikatglas, die bei einer solchen Temperatur noch einen Elastizitätsmodul von z. B. 7357 Da N/mm$^2$ (7500 kg/mm$^2$) aufweisen.

Erfindungsgemäß werden die Faserschichten zusätzlich mit einem oder meheren hochdispersen Pulvern dotiert. Die verwendeten Pulver sollten eine Teilchengröße aufweisen, die $\leqslant$ 0,3 bis 0,5 µm beträgt.

Die Erfindung wird nachfolgend anhand von Zeichnungen näher erläutert.

Es zeigen:

Figur 1: Eine thermische Isolierung im Vertikalschnitt,

Figur 2: eine Rohrleitung mit der thermischen Isolierung.

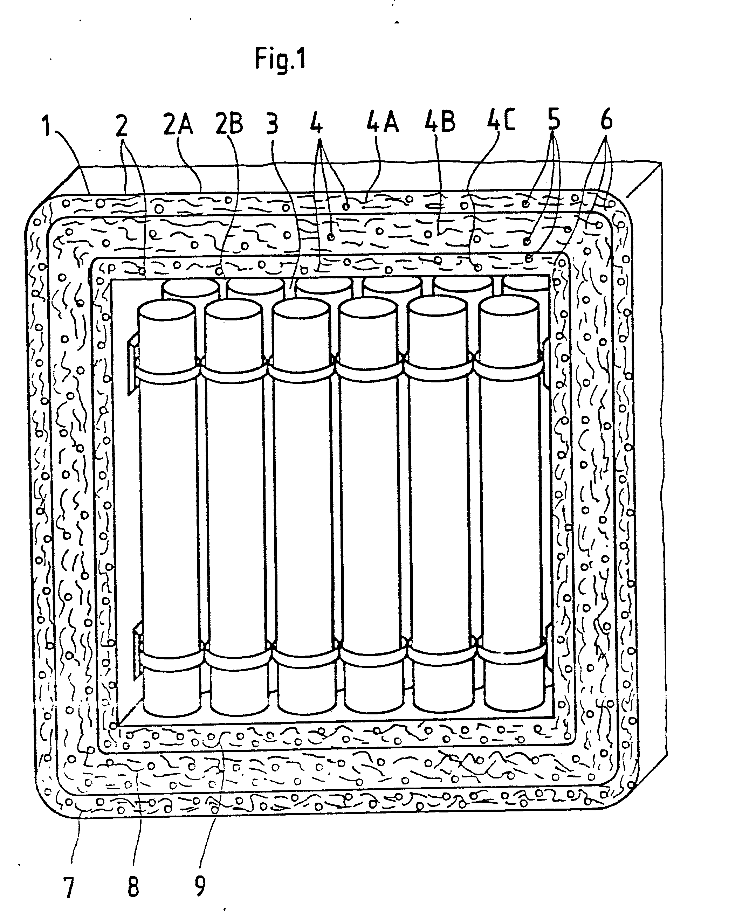

Figur 1 zeigt die thermische Isolierung 1, die von einem doppelwandigen Gehäuse 2 begrenzt ist. Dieses weist einen quaderförmigen Querschnitt auf. Es besitzt einen Innenraum 3, der bei dem hier dargestellten Ausführungsbeispiel zur Aufnahme von Speicherzellen dient. Die äußere und innere Gehäusewandung 2A und 2B sind aus Stahl oder Edelstahl gefertigt. Die beiden Gehäusewandungen 2A und 2B sind in einem vorgebbaren Abstand parallel zueinander angeordnet. Der Abstand zwischen der inneren und äußeren Gehäusewandung 2A und 2B richtet sich nach der gewünschten Breite des zu bildenden Raumes 6, der zwischen diesen Wandungen angeordnet und rundum geführt ist. Die äußere metallische Gehäusewandung 2A ist gasdicht ausgebildet, das gleiche gilt für die innere Gehäusewandung 2B. Durch diese Maßnahmen wird erreicht, daß der Raum 6 gasdicht ausgebildet werden kann. Insbesondere besteht die Möglichkeit, diesen Raum 6 dauerhaft zu evakuieren. Bei dem hier gezeigten Ausführungsbeispiel weist der Raum einen Restgasdruck von weniger als 0,1 mbar auf. Vor dem gasdichten Verschließen und Evakuieren des Raumes 6 wird in diesen das Isoliermaterial 4 eingefüllt. Bei dem hier dargestellten Ausführungsbeispiel besteht das Isoliermaterial 4 aus drei Schichten 4A, 4B und 4C. Die Schichten sind so angeordnet, daß sie senkrecht zum Temperaturgradienden verlaufen. Alle drei Schichten 4A, 4B und 4C bestehen im wesentlichen aus Glasfasern. Die Schichten sind hintereinander angeordnet und grenzen direkt aneinander an. Die äußerste Schicht 4A liegt zusätzlich an der Innenfläche der äußeren Gehäusewandung 2A an, während die innerste Schicht 4C an die Außenflächen der inneren Gehäusewandung 2B angrenzt. Die drei Schichten 4A und 4B und 4C sind unterschiedlich dick ausgebildet. Erfindungsgemäß ist die äußerste Schicht 4A zehn Millimeter dick. Die an sie anschließende Schicht 4B weist eine Dicke von 15 mm auf, während die ganz innen liegende Schicht 4C nur 5 mm dick ausgebildet ist. Die für die Herstellung der Schichten 4A, 4B und 4C verwendeten Glasfasern 7,8 und 9 sind aus unterschiedlichen Glaswerkstoffen hergestellt. Für die Fertigung der Schicht 4A werden vorzugsweise Glasfasern aus Alkali-Bleisilikatglas verwendet. Die Schicht 4B wird aus Glasfasern hergestellt, für deren Fertigung vorzugsweise Weich-Borsilikatglas benutzt wird. Die Glasfasern 9, die in der Schicht 4C enthalten sind, sind aus einem Hart-Borsilikatglas hergestellt. Zusätzlich kann eine der Schichten bzw. falls es sinnvoll ist, können alle drei Schichten 4A, 4B und 4C mit einem hochdispersen Pulver 5 dotiert werden. Es besteht die Möglichkeit für die Dotierung auch unterschiedliche Pulver zu verwenden. Erfindungsgemäß sollten die Pulver jedoch nur eine Teilchengröße von 0,3 bis 0,5 um aufweisen.

Für die zusätzliche Dotierung der Schichten mit einem oder mehreren der oben genannten Pulver eignen sich vorzugsweise Kieselsäuren.

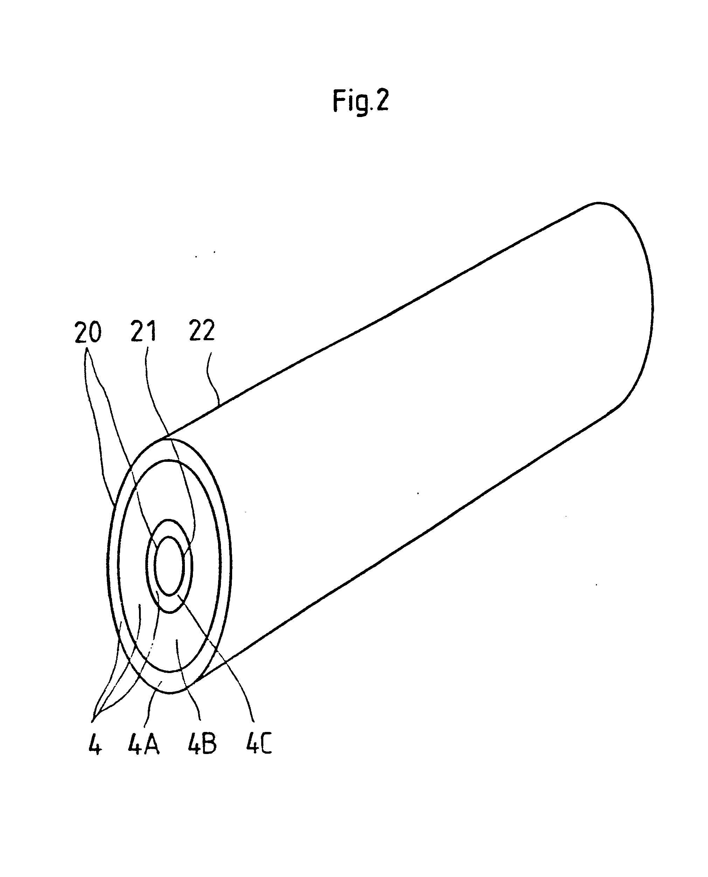

Figur 2 zeigt eine weitere Ausführungsform der thermischen Isolierung 1. Diese ist hierbei um ein Rohrleitungssystem 20 angeordnet, innerhalb dessen heiße strömende Gase transportiert werden. Innerhalb des Rohrsystems 20 können andererseits auch tiefgekühlte Medien wie beispielsweise Flüssiggase transportiert werden. Das Rohrleitungssystem 20 wird durch zwei Rohre 21 und 22 gebildet, die unterschiedliche Durchmesser aufweisen. Insbesondere ist das mit dem kleineren Durchmesser versehene Rohr 21 konzentrisch innerhalb des Rohres 22 angeordnet. Dadurch wird ein gleichmäßiger Zwischenraum zwischen den beiden Rohren 21 und 22 geschaffen, der als Raum 6 dient, welcher evakuiert werden kann, und zur Aufnahme des Isoliermaterials 4 dient. An den Enden dieser beiden Rohre 21 und 22 ist der Raum 6 durch metallische Ringscheiben (hier nicht dargestellt) gasdicht verschlossen. Das Isoliermaterial 4 wird auch hierbei durch drei Schichten 4A, 4B und 4C gebildet, die in gleicher Weise wie die in Figur 1 dargestellten Schichten ausgebildet sind. Die drei Schichten sind senkrecht zum Temperaturgradienten angeordnet. Sie weisen die gleichen Abmessungen auf, wie die in Figur 1 gezeigten Schichten. Eine zusätzliche Dotierung der Schichten mit hochdispersen Pulvern ist auch hierbei möglich und sinnvoll.

**Patentansprüche**

1. Thermische Isolierung (1) mit einem doppelwandigen Gehäuse (2), zwischen dessen beiden Gehäusewandungen (2A, 2B) ein evakuierter Raum (6) vorgesehen ist, der mindestens eine den Wärmefluß zwischen den beiden Gehäusewandungen (2A, 2B) hemmendes, senkrecht zum Temperaturgradienden angeordnetes faserförmiges Isoliermaterial (4) enthält, dadurch gekennzeichnet, daß innerhalb des evakuierten Raumes (6) mindestens drei Schichten (4A, 4B, 4C) aus verschiedenen Glasfasern (7, 8, 9) hintereinander senkrecht zum Temperaturgradienden angeordnet sind, daß die äußerste Schicht aus Fasern von Alkali-Blei-Silikatglas gefertigt ist und eine Dicke von 10 mm aufweist, daß die zweite, mittlere Schicht (4B) aus Fasern von Weich-Borsilikatglas hergestellt ist und eine Dicke von 15 mm aufweist, und daß die innerste Schicht (4C) aus Fasern von Hart-Borsilikatglas gefertigt ist, und eine Dicke von 5 mm aufweist.

2. Thermische Isolierung nach Anspruch 1, dadurch gekennzeichnet, daß die Glasfasern (7, 8, 9) wenigstens teilweise mit einem oder mehreren hochdispersen Pulvern dotiert sind, die eine Teilchengröße von höchstens 0,3 bis 0,5 μm aufweisen.

3. Thermische Isolierung nach einem der Ansprüche 1 oder 2, dadurch gekennzeichnet, daß alle Schichten (4A, 4B und 4C) mit einem oder mehreren hochdispersen Pulvern (5) dotiert sind, deren Teilchengröße höchstens 0,3 bis 0,5 μm beträgt.

4. Thermische Isolierung nach einem der Ansprüche 1 bis 3, dadurch gekennzeichnet, daß die Schichten (4A, 4B, 4C) direkt aneinander angrenzen und die äußerste Schicht (4A) an die Innenflächen der äußeren Gehäusewandung (2A) und die innerste Schicht (4C) an die Außenflächen der inneren Gehäusewandung (2B) direkt angrenzen.

## Claims

1. Thermal insulation (1) with a double-walled housing (2), between the two housing walls (2A, 2B) of which an evacuated space (6) is provided, which contains at least one fibrous insulating material (4) which impedes the heat flux between the two housing walls (2A, 2B) and is arranged perpendicular to the temperature gradient, characterized in that at least three layers (4A, 4B, 4C) of different glass fibres (7, 8, 9) are arranged one behind the other perpendicular to the temperature gradient within the evacuated space (6), that the outermost layer is made of alkali/lead silicate glass fibres and has a thickness of 10 mm, that the second, middle layer (4B) is made of fibres of soft borosilicate glass and has a thickness of 15 mm, and that the innermost layer (4C) is made of fibres of hard borosilicate glass and has a thickness of 5 mm.

2. Thermal insulation according to Claim 1, characterized in that the glass fibres (7, 8, 9) are at least partially doped with one or more highly disperse powders having a particle size of at most 0.3 to 0.5 μm.

3. Thermal insulation according to one of Claims 1 or 2, characterized in that all the layers (4A, 4B and 4C) are doped with one or more highly disperse powders (5) having a particle size of at most 0.3 to 0.5 μm.

4. Thermal insulation according to one of Claims 1 to 3, characterized in that the layers (4A, 4B, 4C) directly adjoin one another and the outermost layer (4A) directly adjoins the inner surfaces of the outer housing wall (2A) and the innermost layer (4C) directly adjoins the outer surfaces of the inner housing wall (2B).

## Revendications

1. Isolation thermique (1) comportant une enceinte (2) à double paroi, entre les deux parois (2A, 2B) de laquelle est prévu un espace sous vide (6) contenant au moins un matériau isolant sous forme de fibres (4) disposées perpendiculairement au gradient de température, pour inhiber le flux de chaleur entre les deux parois (2A, 2B) de l'enceinte, caractérisée par le fait qu'au moins trois couches (4A, 4B, 4C) de différentes fibres de verre (7, 8, 9) sont disposées les unes à la suite des autres, perpendiculairement au gradient de température, à l'intérieur de l'espace sous vide (6), par le fait que la couche la plus extérieure est faite de fibres de verre au silicate de plomb alcalin et présente une épaisseur de 10 mm, par le fait que la deuxième couche (4B) constituant la couche médiane est réalisée avec des fibres de verre de borosilicate doux et présente une épaisseur de 15 mm, et par le fait que la couche (4C) la plus intérieure est faite de fibres de verre de borosilicate dur et présente une épaisseur de 5 mm.

2. Isolation thermique selon revendication 1, caractérisée par le fait que les fibres de verre sont au moins partiellement dopées avec une ou plusieurs poudres très dispersées dont les particules ont une taille n'excédant pas 0,3 à 0,5 μm.

3. Isolation thermique selon l'une des revendications 1 ou 2, caractérisée par le fait que toutes les couches (4A, 4B, 4C) sont dopées avec une ou plusieurs poudres (5) très dispersées dont les particules ont une taille n'excédant pas 0,3 à 0,5 μm.

4. Isolation thermique selon l'une des revendications 1 à 3, caractérisée par le fait que les couches (4A, 4B, 4C) sont mutuellement adjacentes, par le fait que la couche la plus extérieure (4A) est adjacente aux surfaces intérieures de la paroi extérieure (2A) de l'enceinte et par le fait que la couche la plus intérieure (4C) est adjacente aux surfaces extérieures de la paroi intérieure (2B) de l'enceinte.

# Fig.1

# Fig.2

20  21  22

4  4A  4B  4C